# EUROPEAN PATENT SPECIFICATION

(11) **EP 1 732 285 B1**
(45) Date of publication and mention of the grant of the patent: **22.07.2009**
(21) Application number: 06008960.4
(22) Date of filing: 28.04.2006
(51) Int. Cl.: H04L 29/06, H04L 29/08

(54) **Apparatus and methods for a high performance hardware network protocol processing engine**
Gerät und Verfahren für eine hoch leistungsfähige, als Hardware implementierte Verarbeitungseinrichtung für Netzwerkprotokolle
Appareil et méthodes pour un moteur de traitement de protocoles matériel à haute performance

(30) Priority: 07.06.2005 US 688266 P; 16.09.2005 US 228863
(43) Date of publication of application: 13.12.2006
(73) Proprietor: Broadcom Corporation, Irvine, CA 92617 (US)
(72) Inventor: Pong, Fong, Irvine, California 92618-7013 (US)
(74) Representative: Jehle, Volker Armin

(56) References cited:
- EP-A- 1 359 727
- US-A1- 2002 107 971
- US-A1- 2004 125 751
- KOUFOPAVLOU O G ET AL: "Analysis of TCP/IP for high performance parallel implementations" LOCAL COMPUTER NETWORKS, 1992. PROCEEDINGS., 17TH CONFERENCE ON MINNEAPOLIS, MN, USA 13-16 SEPT. 1992, LOS ALAMITOS, CA, USA,IEEE COMPUT. SOC, US, 13 September 1992 (1992-09-13), pages 576-585, XP010030820 ISBN: 0-8186-3095-7

## Description

### FIELD OF THE INVENTION

Certain embodiments of the invention relate to accessing computer networks. More specifically, certain embodiments of the invention relate to a method and system for a high performance hardware network protocol processing engine.

### BACKGROUND OF THE INVENTION

The International Standards Organization (ISO) has established the Open Systems Interconnection (OSI) Reference Model. The OSI Reference Model provides a network design framework allowing equipment from different vendors to be able to communicate. More specifically, the OSI Reference Model organizes the communication process into seven separate and distinct, interrelated categories in a layered sequence. Layer 1 is the Physical Layer. It deals with the physical means of sending data. Layer 2 is the Data Link Layer. It is associated with procedures and protocols for operating the communications lines, including the detection and correction of message errors. Layer 3 is the Network Layer. It determines how data is transferred between computers. Layer 4 is the Transport Layer. It defines the rules for information exchange and manages end-to-end delivery of information within and between networks, including error recovery and flow control. Layer 5 is the Session Layer. It deals with dialog management and controlling the use of the basic communications facility provided by Layer 4. Layer 6 is the Presentation Layer. It is associated with data formatting, code conversion and compression and decompression. Layer 7 is the Applications Layer. It addresses functions associated with particular applications services, such as file transfer, remote file access and virtual terminals.

Various electronic devices, for example, computers, wireless communication equipment, and personal digital assistants, may access various networks in order to communicate with each other. For example, transmission control protocol/internet protocol (TCP/IP) may be used by these devices to facilitate communication over the Internet. TCP enables two applications to establish a connection and exchange streams of data. TCP guarantees delivery of data and also guarantees that packets will be delivered in order to the layers above TCP. Compared to protocols such as UDP, TCP may be utilized to deliver data packets to a final destination in the same order in which they were sent, and without any packets missing. The TCP also has the capability to distinguish data for different applications, such as, for example, a Web server and an email server, on the same computer.

Accordingly, the TCP protocol is frequently used with Internet communications. The traditional solution for implementing the OSI stack and TCP/IP processing may have been to use faster, more powerful processors. For example, research has shown that the common path for TCP input/output processing costs about 300 instructions. At the maximum rate, about 15 million (M) minimum size packets are received per second for a 10 Gbit/s connection. As a result, about 4,500 million instructions per second (MIPS) are required for input path processing. When a similar number of MIPS is added for processing an outgoing connection, the total number of instructions per second, which may be close to the limit of a modern processor. For example, an advanced Pentium 4 processor may deliver about 10,000 MISS of processing power. However, in a design where the processor may handle the entire protocol stack, the processor may become a bottleneck.

As network speed increases, some designs may alleviate the processor bottleneck by using faster processors and/or adding more processors. However, the processors may still be slowed down by accesses to memory, for example, DRAMs. A solution may be cache memories. However, when a cache miss occurs, processor performance may degrade significantly while waiting for the cache to be filled with data from the slow memory.

Additionally, ternary content addressable memory (T-CAM) devices may be used to facilitate, for example, TCP session lookup operations. T-CAM memory may be used because of the speed of searches possible, which may be faster than software based algorithmic searches. However, a disadvantage of T-CAM memory may be the power used.

US 2002/0107971 describes a network endpoint system which receives requests delivered in packet format via a network. The system uses a transport accelerator at its front end, which performs all or some of the network protocol processing. The transport accelerator is directly connected to one or more processing units, which respond to the requests. The protocol processing may be partitioned between the transport accelerator and the processing units in a manner that improves use of their different processing capabilities.

Koufopavlou, O. G. et al.: "Analysis of TCP/IP for high performance parallel implementations", Local Computer Networks, 1992, IEEE Comput. Soc., US, 13 September 1992, pages 576-585, ISBN: 0-8186-3095-7 provides an analysis of TCP/IP for parallel implementations. Each layer (IP and TCP) is analyzed to extract possible types of parallelism. Further it is shown that the integration of both layers could be very efficient since processing of both layers can be considerably overlapped. The resulting integrated parallel TCP/IP structure may constitute a valuable basis for efficiently mapping and tuning TCP/IP on multiprocessor platforms.

Further limitations and disadvantages of conventional and traditional approaches will become apparent to one of skill in the art, through comparison of such systems with some aspects of the present invention as set forth in the remainder of the present application with reference to the drawings.

For these and other reasons, there is a need for the present invention.

According to the invention, there are provided a method for handling network data as defined by independent claim 1, and a system for handling network data as defined by independent claim 7.

Further advantageous features of the invention are defined by the dependent subclaims.

A system and/or method for a high performance hardware network protocol processing engine, substantially as shown in and/or described in connection with at least one of the figures, as set forth more completely in the claims.

Advantageously, the method further comprises parsing within said single network chip, headers of said TCP packets that are received at a first stage of said parallel, pipelined hardware stages.

Advantageously, the method further comprises validating within said single network chip, Ethernet frame CRCs digests, IP header checksums and TCP checksums for said TCP packets that are received at said first stage of said parallel, pipelined hardware stages.

Advantageously, the method further comprises performing within said single network chip, IP address validation of said TCP packets that are received at said first stage of said parallel, pipelined hardware stages.

Advantageously, the method further comprises performing within said single network chip, TCB index look-up of said TCP packets that are received at a second stage of said parallel, pipelined hardware stages.

Advantageously, the method further comprises scheduling within said single network chip, look-up of TCB data at a third stage of said parallel, pipelined hardware stages for at least one of the following: said TCP packets that are received, and said TCP packets that are to be transmitted.

Advantageously, the method further comprises storing said TCB data at said third stage of said parallel, pipelined hardware stages within said single network chip for at least one of the following: said TCP packets that are received, and said TCP packets that are to be transmitted.

Advantageously, the method further comprises storing at least a portion of said TCB data corresponding to said processed TCP packets in memory external to said single network chip.

Advantageously, the method further comprises caching within said single network chip, at least a portion of TCB data for an active network connection being processed by said network chip.

Advantageously, the method further comprises performing from within said single network chip, receive processing of said TCP packets at a fourth stage of said parallel, pipelined hardware stages.

Advantageously, the method further comprises initiating at a fifth stage of said parallel, pipelined hardware stages within said single network chip, transfer to an application layer of said processed TCP packets that are received.

Advantageously, the method further comprises re-assembling at a fifth stage of said parallel, pipelined hardware stages within said single network chip, TCP packets that are received out-of-order prior to said initiating said transfer.

Advantageously, the method further comprises initially creating at a fifth stage of said parallel, pipelined hardware stages in said single network chip, said TCP packets that are to the transmitted based on data from an application.

Advantageously, the method further comprises pre-pending at a first stage of said parallel, pipelined hardware stages within said single network chip, TCP and IP packet headers to said initially created TCP packets that are to be transmitted.

Advantageously, the method further comprises generating at a first stage of said parallel, pipelined hardware stages within said single network chip, Ethernet frames comprising at least said TCP and IP packet headers pre-pended to initially created TCP packets.

Advantageously, a first stage of said plurality of parallel, pipelined hardware stages parses within said single network chip, headers of said TCP packets that are received.

Advantageously, said first stage of said plurality of parallel, pipelined hardware stages validates within said single network chip, Ethernet frame CRC digests, IP checksums and TCP checksums for said TCP packets that are received.

Advantageously, said first stage of said plurality of parallel, pipelined hardware stages performs within said single network chip, IP address validation of said TCP packets that are received.

Advantageously, a second stage of said plurality of parallel, pipelined hardware stages performs within said single network chip, TCB index look-up of said TCP packets that are received.

Advantageously, a third stage of said plurality of parallel, pipelined hardware stages schedules within said single network chip, look-up of TCB data for at least one of the following: said TCP packets that are received, and said TCP packets that are to be transmitted.

Advantageously, a third stage of said plurality of parallel, pipelined hardware stages stores within said single network chip, said TCB data for at least one of the following: said TCP packets that are received, and said TCP packets that are to be transmitted.

Advantageously, said third stage of said plurality of parallel, pipelined hardware stages stores at least a portion of said TCB data corresponding to said processed TCP packets in memory external to said single network chip.

Advantageously, at least one stage of said plurality of parallel, pipelined hardware stages caches within said single network chip, at least a portion of TCB data for an active network connection being processed by said network chip.

Advantageously, a fourth stage of said plurality of parallel, pipelined hardware stages performs within said single network chip, receive processing of said TCP packets that are received.

Advantageously, a fifth stage of said plurality of parallel, pipelined hardware stages initiates within said single network chip, transfer to an application layer of said processed TCP packets that are received.

Advantageously, said fifth stage of said plurality of parallel, pipelined hardware stages re-assembles from within said single network chip, TCP packets that are received out-of-order prior to said initiating said transfer.

Advantageously, a fifth stage of said plurality of parallel, pipelined hardware stages initially creates from within said single network chip, said TCP packets that are to the transmitted based on data received from an application.

Advantageously, the system further comprises pre-pending TCP and IP packet headers to said initially created TCP packets that are to be transmitted at a first stage of said parallel, pipelined hardware stages within said single network chip.

Advantageously, the system further comprises generating Ethernet frames comprising at least said TCP and IP packet headers pre-pended to said initially created TCP packets at said first stage of said parallel, pipelined hardware stages within said single network chip.

Various advantages, aspects and novel features of the present invention, as well as details of an illustrated embodiment thereof, will be more fully understood from the following description and drawings.

### BRIEF DESCRIPTION OF SEVERAL VIEWS OF THE DRAWINGS

FIG. 1a is a block diagram of an exemplary communication system, which may be utilized in connection with an embodiment of the invention.

FIG. 1b is a block diagram of an exemplary system for a non-offloaded Internet protocol stack, which may be utilized in connection with an embodiment of the invention.

FIG. 1c is a block diagram of an exemplary system for an Internet protocol stack with an intelligent network interface card, which may be utilized in connection with an embodiment of the invention.

FIG. 2 is a diagram illustrating an implementation of a TCP/IP stack in a modern computer system, which may be utilized in connection with an embodiment of the invention.

FIG. 3a is a block diagram of an exemplary network chip comprising a plurality of pipelined hardware stages, in accordance with an embodiment of the invention.

FIG. 3b is a diagram illustrating exemplary pipelined hardware stages, in accordance with an embodiment of the invention.

FIG. 4a is an exemplary flow diagram illustrating receiving of network data by a first stage of a plurality of parallel, pipelined hardware stages, in accordance with an embodiment of the invention.

FIG. 4b is an exemplary flow diagram illustrating transmitting of network data by a first stage of a plurality of parallel, pipelined hardware stages, in accordance with an embodiment of the invention.

FIG. 5 is a block diagram of a second stage of a plurality of parallel, pipelined hardware stages, in accordance with an embodiment of the invention.

FIG. 6 is a block diagram of a third stage of a plurality of parallel, pipelined hardware stages, in accordance with an embodiment of the invention.

FIG. 7 is a block diagram of a second stage and a fourth stage of a plurality of parallel, pipelined hardware stages, in accordance with an embodiment of the invention.

FIG. 8 is an exemplary flow diagram illustrating a fifth stage of a plurality of parallel, pipelined hardware stages, in accordance with an embodiment of the invention.

FIG. 9a is an exemplary flow diagram illustrating transmitting of data to a network via a plurality of parallel, pipelined hardware stages, in accordance with an embodiment of the invention.

FIG. 9b is an exemplary flow diagram illustrating receiving of data from a network via a plurality of parallel, pipelined hardware stages, in accordance with an embodiment of the invention.

### DETAILED DESCRIPTION OF THE INVENTION

Certain embodiments of the invention may be found in a method and system for a high performance hardware network protocol processing engine. Aspects of the method may comprise a plurality of pipelined hardware stages on a single network chip for processing of TCP packets that are received and/or TCP packets that are to be transmitted. Headers of the TCP packets that are received may be parsed, and Ethernet frame CRCs for the TCP packets that are received may be validated, at a first stage of the parallel, pipelined hardware stages. IP addresses of the TCP packets that are received may also be validated at the first stage. TCB index of the TCP packets that are received may be looked up at a second stage of the parallel, pipelined hardware stages. The TCP packets that are received and/or the TCP packets that are to be transmitted may be scheduled for TCB data look-up, and the TCB data may be fetched at a third stage of the parallel, pipelined hardware stages.

The TCB data may be stored at the third stage of the parallel, pipelined hardware stages for the TCP packets that are received and/or the TCP packets that are to be transmitted. At least a portion of the TCB data corresponding to the processed TCP packets may be stored in memory external to the single network chip and/or cached within the single network chip. Receive processing of the TCP packets may be performed at a fourth stage of the parallel, pipelined hardware stages. A fifth stage of the parallel, pipelined hardware stages may be used to initiate transfer to an application layer of the processed TCP packets that are received. The TCP packets that are received out-of-order prior to the initiating the transfer may be re-assembled at a fifth stage of the parallel, pipelined hardware stages.

The fifth stage of the parallel, pipelined hardware stages may be used to initially create the TCP packets that are to the transmitted based on data from an application. The TCP and IP packet headers may be pre-pended to the initially created TCP packets that are to be transmitted at a first stage of the parallel, pipelined hardware stages. The first stage of the parallel, pipelined hardware stages may be used to generate Ethernet frames comprising at least the TCP and IP packet headers pre-pended to the initially created TCP packets within the single network chip.

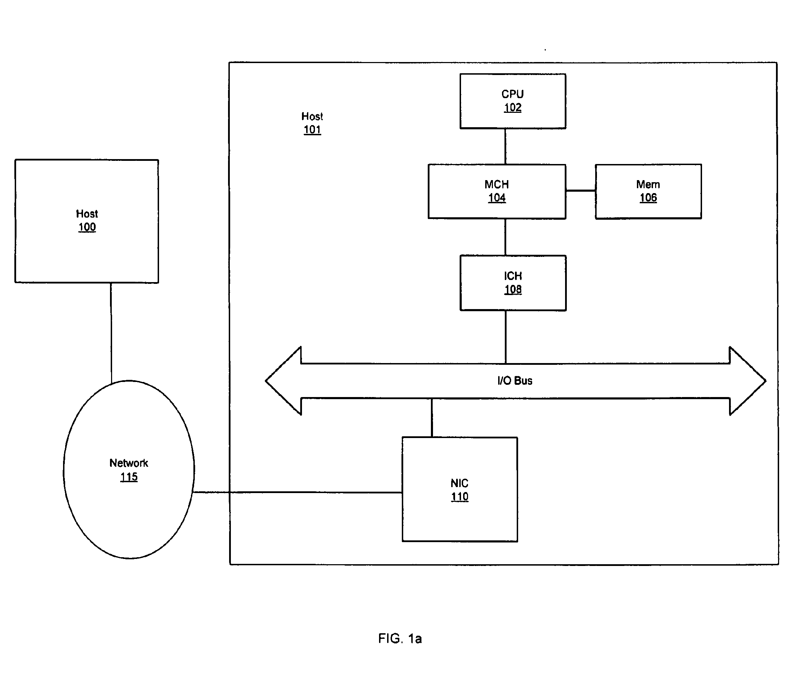

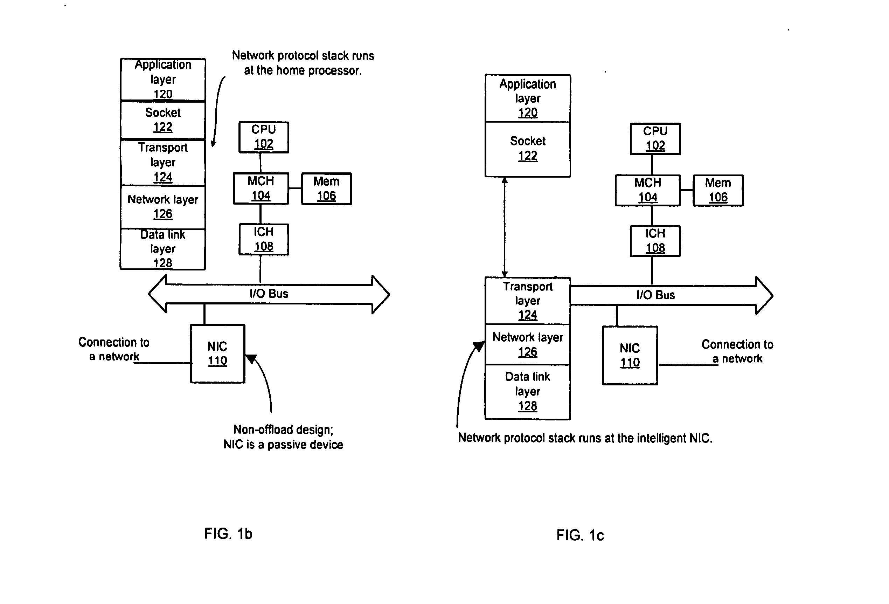

FIG. 1 a is a block diagram of an exemplary communication system, which may be utilized in connection with an embodiment of the invention. Referring to FIG. 1a, there is shown hosts 100 and 101, and a network 115. The host 101 may comprise a central processing unit (CPU) 102, a memory interface (MCH) 104, a memory block 106, an input/output (IO) interface (ICH) 108, and a network interface card (NIC) 110.

The memory interface (MCH) 104 may comprise suitable circuitry and/or logic that may be adapted to transfer data between the memory block 106 and other devices, for example, the CPU 102.

The input/output interface (ICH) 108 may comprise suitable circuitry and/or logic that may be adapted to transfer data between IO devices, between an IO device and the memory block 106, or between an IO device and the CPU 102.

The network interface chip/card (NIC) 110 may comprise suitable circuitry, logic and/or code that may be adapted to transmit and receive data from a network, for example, an Ethernet network. The NIC 110 may process received data and/or data to be transmitted. The amount of processing may be design and/or implementation dependent. Generally, the NIC 110 may comprise a single chip that may also utilize on-chip memory and/or off-chip memory.

In operation, the host 100 and the host 101 may communicate with each other via, for example, the network 115. The network 115 may be an Ethernet network. Accordingly, the host 100 and/or 101 may send and/or receive packets via a network interface card, for example, the NIC 110. For example, the CPU 102 may fetch instructions from the memory block 106 and execute those instructions. The CPU 102 may additionally store within, and/or retrieve data from, the memory block 106. For example, a software application running on the CPU 102 may have data to transmit to a network, for example, the network 115. An example of the software application may be email applications that are used to send email sent between the hosts 100 and 101.

Accordingly, the CPU 102 in the host 101 may process data in an email and communicate the processed data to the NIC 110. The data may be communicated to the NIC 110 directly by the CPU 102. Alternatively, the data may be stored in the memory block 106. The stored data may be transferred to the NIC 110 via, for example, a direct memory access (DMA) process. Various parameters needed for the DMA, for example, the source start address, the number of bytes to be transferred, and the destination start address, may be written by the CPU 102 to, for example, the memory interface (MCH) 104. Upon a start command, the memory interface (MCH) 104 may start the DMA process. In this regard, the memory interface (MCH) 104 may act as a DMA controller.

The NIC 110 may further process the email data and transmit the email data as packets in a format suitable for transfer over the network 115 to which it is connected. Similarly, the NIC 110 may receive packets from the network 115 to which it is connected. The NIC 110 may process data in the received packets and communicate the processed data to higher protocol processes that may further process the data. The processed data may be stored in the memory block 106, via the IO interface (ICH) 108 and the memory interface (MCH) 104. The data in the memory block 106 may be further processed by the email application running on the CPU 102 and finally displayed as a, for example, text email message for a user on the host 101.

FIG. 1b is a block diagram of an exemplary system for a non-offloaded Internet protocol stack, which may be utilized in connection with an embodiment of the invention. Referring to the FIG. 1b, there is shown the host 101 that may comprise the CPU 102, the MCH 104, the memory block 106, the ICH 108, and the NIC 110. There is also shown an application layer 120, a socket 122, a transport layer 124, a network layer 126, and a data link layer 128.

The application layer 120, the transport layer 124, the network layer 126, and the data link layer 128 may be part of a protocol stack for receiving and transmitting data from a network. The protocol stack may be, for example, the Internet protocol (IP) suite of protocols used by the Internet. The IP suite of protocols may comprise application layer protocols, transport layer protocols, a network layer protocols, data link layer protocols, and physical layer protocols. The socket 122 may comprise a software process that may allow transfer of data between two other software processes. Accordingly, the socket 122 may be viewed as a conduit for transfer of data between the application layer 120 and the transport layer 124. The physical layer may be the medium that connects one host on a network to another host. For example, the medium may be cables that serve to conduct the network signals in a network, for example, an Ethernet network.

When receiving an email, for example, the email may be received by the NIC 110 from the physical layer, for example, the Ethernet media, as a series of packets. The NIC 110 may store the received packets to the memory bock 106. The CPU 102 may, for example, execute the data link layer 128 protocol to, for example, remove the physical layer framing from each packet. The framing may comprise node addresses, and bit patterns that may indicate the start and end of each packet. The CPU 102 may then, for example, execute the protocols for the next OSI layer in the protocol stack. This OSI layer may be, for example, network layer 126, and may comprise removing the network related information from each packet that may be used to route the packets from one network to another. The next layer of protocol to be executed may be the transport layer 124. The transport layer 124 may, for example, ensure that all packets for a file have been received, and may assemble the various packets in order.

The assembled file may then be processed by the application layer 120 protocol. The application layer 120 protocol may be a part of an application, for example, an email application. The application layer 120 protocol may, for example, ensure that data format may be the format used by the application. For example, the characters in the email message may have been encoded using the ASCII format, rather than the EBCDIC format.

When transmitting data to the network, the protocol stack may be traversed in the other direction. For example, from the application layer 120 to the transport layer 124, then to the network layer 126, then to the data link layer 128, and finally to the physical layer. The application layer 120 may encode the application file to a standard format for this type of application. The transport layer 124 may separate the file into packets, and each packet may be identified so that the corresponding transport layer at the receiving host may be able to re-assemble the received packets in order. The network layer 126 may encapsulate the packets from the transport layer 124 in order to be able to route the packets to a desired destination, which may be in a different network. The data link layer 128 may provide framing for the packets so that they may be addressed to a specific node in a network.

FIG. 1c is a block diagram of an exemplary system for implementing an Internet protocol stack with an intelligent network interface card, which may be utilized in connection with an embodiment of the invention. Referring to FIG. 1c, there is shown a diagram similar to the diagram in FIG. 1 b. However, the protocol stack may be separated. For example, the transport layer 124, the network layer 126, and the data link layer 128 may be executed by the NIC 110, rather than by the CPU 102 as in FIG. 1b. The NIC 110 may be referred to as an intelligent NIC since it may handle some of the protocol stack processing, for example, the transport layer 124, internet protocol (IP) for the network layer 126, and Ethernet protocol for the data link layer 128. This may free the CPU 102, which may only have to process the socket 122 and the application layer 120 protocol, to allocate more processing resources to handle application software. Accordingly, the performance of the processor may be increased so that it may more efficiently execute application software. Implementations of intelligent NIC, for example, the NIC 110, may rely on embedded processors and firmware to handle network protocol stack.

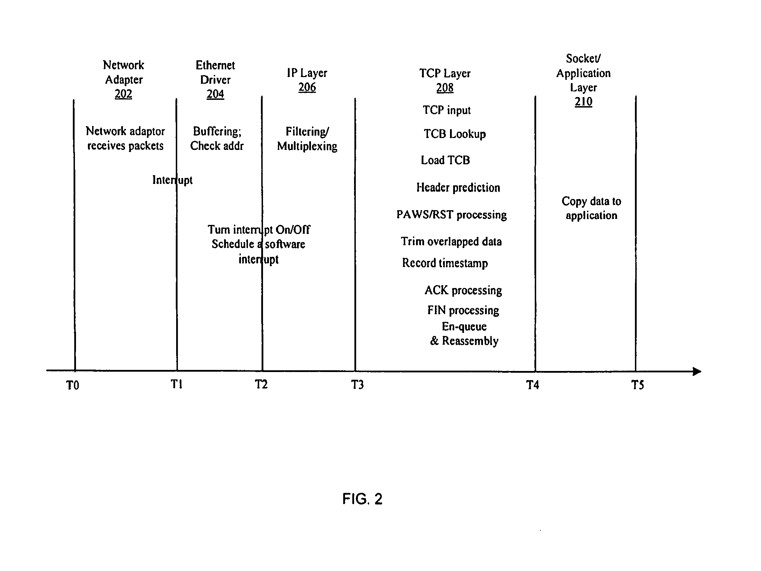

FIG. 2 is a diagram illustrating an implementation of a TCP/IP stack in a modern computer system, which may be used in connection with an embodiment of the invention. Referring to FIG. 2, there is shown a physical layer 202, a data link layer 204, an IP layer 206, a TCP layer 208, and an application layer 210 of the TCP/IP protocol stack. Also shown are steps taken in the various layers 202, 204, 206, 208, and 210 of the TCP/IP protocol stack during the time period from a time instant T0 to a time instant T5. The steps in the protocol stack may be executed by the host processor, for example, the CPU 102.

After the time instant T0, a network controller, for example, the NIC 110, may receive data from a network, for example, an Ethernet network. The data packets received by the NIC 110 are destined for NIC 110 if a MAC address in those packets is the same as the MAC address for the NIC 110.

At time instant T1, the NIC 110 may interrupt the CPU 102 to notify it of received packets. The interrupt to the CPU 102 may trigger a context switch, which may comprise saving various information for the current process being executed and interrupted, and loading new information for the various registers. The information in the registers involved in the context switch may include, for example, the general purpose registers, program counters, stack pointers, etc, in the CPU 102. New information may have to be loaded to service the interrupt. In this regard, the context switch may consume valuable CPU processing time.

As part of an interrupt service routine, an Ethernet driver 204, which may be a portion of the data link layer 128 (FIG. 1 b), may remove, for example, Ethernet framing information. The Ethernet driver 204 may allocate a secondary control buffer to track the received packets. Allocation and initialization of the control buffer may cause a number of cache misses. When a cache miss occurs, the processor performance may degrade significantly while waiting for data from external memory. The Ethernet driver 204 may also need to replenish the network adapter with receive buffers in order to make received packets available for further protocol processing. The Ethernet driver 204 may then insert the received packet in an input queue of the receive buffer, and schedule a software interrupt so that the protocol process may be continued later. The software interrupt may be scheduled at, for example, a time instant T2.

The IP layer 206, which may initiate execution due to the software interrupt set by the Ethernet driver 204 at time instant T2, may be the network layer 126 (FIG. 1b). The IP layer 206 may comprise validating that the local host, for example, the host 101, may be the destination. The IP layer 206 may also de-multiplex packets to an upper layer, for example, the transport layer 124, in the protocol stack according to the transport protocol. For example, the transport layer 124 may comprise a plurality of protocols, for example, the TCP and user datagram protocol (UDP). The TCP may ensure that data sent by a host, for example, the host 100, may be received in the same order by another host, for example, the host 101, and without any packets missing. The UDP, however, may not provide the reliability and ordering guarantees that are provided by the TCP layer. The packets may arrive out of order or go missing without notice. As a result, however, the UDP may provide a faster and more efficient data transfer for many lightweight or time-sensitive purposes. Some data transfers that may use UDP may be streaming media applications, Voice over IP, and/or online games.

At time instant T3, the TCP layer 208, which may be, for example, the transport layer 124, may start with a session lookup operation for the TCP Control Block (TCB). Each transport layer 124 associated with a network node may maintain state information for each TCP connection. This information may usually be in a data structure that may contain information about the connection state, its associated local process, and feedback parameters about the connection's transmission properties. The TCB may usually be maintained on a per-connection basis. Once the TCB information for the packet is found, or is generated for a new connection, the TCP layer 208 for the receiving host, for example, the host 101, may acknowledge receipt of the packet.

The transmitting host, for example, the host 100, may re-send a packet for which the receiving host may not have sent an acknowledgment after a time-out period. For example, when the TCP layer 208 for the receiving host 101 determines that a file is complete according to protocol, it may perform reassembly and en-queue the received packets to a socket receive buffer. The socket receive buffer may essentially be a linked list that comprises all the received packets in the correct order. The data in the socket receive buffer may be communicated to the application layer by use of the socket 122 at time instant T4. The data in the socket receive buffer may be copied to application memory by the application layer 120.

During the time period from the time instant T3 to the time instant T4, the receiving host may also make header prediction to be able to do fast processing of the next received TCP packet for the respective TCP session. If the received TCP packet is not the predicted packet, additional processing may need to take place. For example, there may need to be protection against wrapped sequence processing in the event that the sequence number may have wrapped around after reaching a maximum value. Additionally, multiple packets may have duplicate or overlapped information, for example, if the sending host sent additional packets because it did not receive acknowledgments for transmitted packets. The duplicated data may need to be trimmed in order to avoid redundancy.

A time stamp may also be generated for each packet received in order help keep track of the TCP packets. There may also be acknowledgment processing of received TCP packets. Also, if the transmitting host requests an end of the TCP session, there may be processing to terminate the TCP session. Finally, there may be en-queueing of received data and in-order re-assembly of the data received.

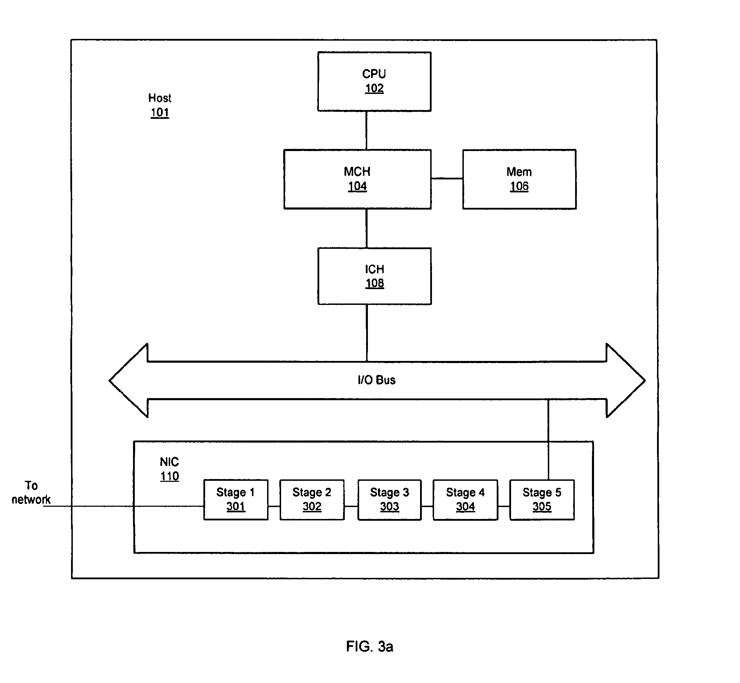

FIG. 3a is a block diagram of an exemplary system comprising a network chip with a plurality of pipelined hardware stages, in accordance with an embodiment of the invention. Referring to FIG. 3a, there is shown the host 101 that comprises the CPU 102, the memory interface (MCH) 104, the memory block 106, the input/output (IO) interface (ICH) 108, and the network interface card (NIC) 110. The NIC 110 may comprise a plurality of pipelined hardware stages 301, 302, 303, 304, and 305 that may operate in parallel.

The pipelined hardware stage 301 may receive data from the network, for example, the network 115, and may transmit data to the network 115. The data received by the pipelined hardware stage 301 may be processed by the pipelined hardware stages 301, 302, 303, 304, and 305. The pipelined hardware stage 305 may transfer payload data to a host memory, for example, the memory block 106, for use by an application program. The application program, which may be executed by the CPU 102, may be, for example, an email program. The data received from the network 115 and transferred to the memory block 106 may be an email from, for example, the host 100.

The pipelined hardware stages 301, 302, 303, 304, and 305 may also process data to transmit to the network 115. The pipelined hardware stage 305 may receive data from an application layer of the application program. Processing may take place in the pipelined hardware stages 305, 304, 303, 302, and 301 in order to generate a packet that may be transmitted to the network 115. For example, an email generated by a user of the email program may be transferred to the pipelined hardware stage 305. The email may be transmitted to, for example, the host 101, via the pipelined hardware stages 305, 304, 303, 302, and 301.

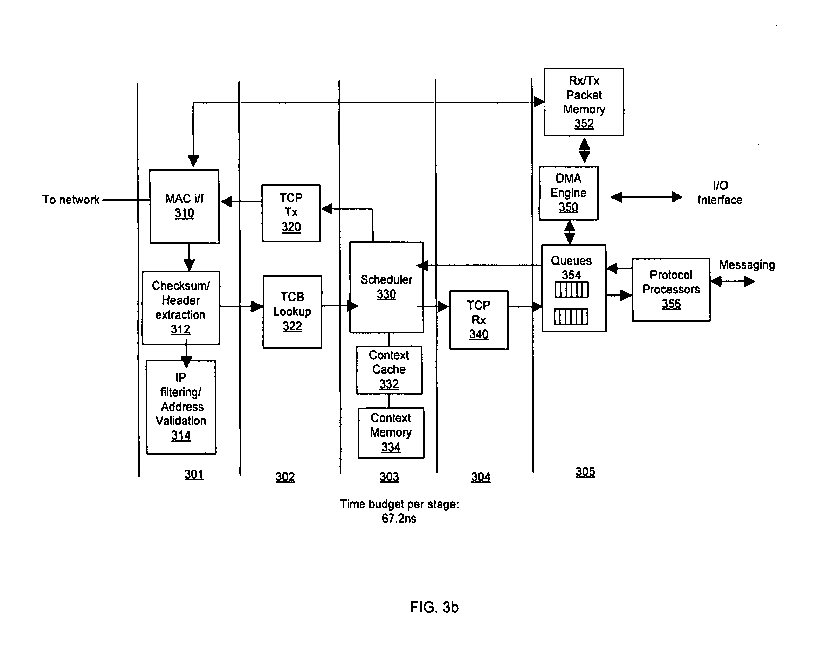

The pipelined hardware stages 301, 302, 303, 304, and 305 is described in more detail with respect to FIGs. 3b, 4a, 4b, 5, 6, 7, 8, 9a, and 9b.

FIG. 3b is a diagram illustrating exemplary pipelined hardware stages, in accordance with an embodiment of the invention. Referring to FIG. 3b, the network protocol may be processed in parallel in pipelined hardware stages 301, 302, 303, 304, and 305. The pipelined hardware stage 301 may comprise a MAC interface block 310, a header block 312, and an IP block 314. The pipelined hardware stage 302 may comprise a TCP transmit block 320 and a TCB lookup block 322. The pipelined hardware stage 303 may comprise a scheduler block 330, a context cache block 332, and a context memory block 334. The pipelined hardware stage 304 may comprise a TCP receive block 340. The pipelined hardware stage 305 may comprise a DMA engine block 350, a packet memory block 352, a queue block 354, and a protocol processor block 356.

The MAC interface block 310 may comprise suitable circuitry and/or logic that may be adapted to receive and/or transmit, for example, Ethernet frames. When receiving the Ethernet frame, the MAC interface block 310 may verify that a MAC destination address may be a local MAC address associated with the MAC interface block 310. If the MAC destination address does not match the local MAC address, the Ethernet frame may be discarded. Otherwise, the MAC interface block 310 may extract the data link layer 128 information, the network layer 126 information, and the transport layer 124 information from the received Ethernet frame. The data link layer 128 information may comprise the MAC header and a CRC digest. The network layer 126 information may comprise a header field. The transport layer 124 information may comprise a header field. The remaining data may be used by the application running at the application layer 120. This data may be stored in the packet memory block 352.

When processing packets that are to be transmitted, the MAC interface block 310 may retrieve data to be transmitted that may be in the packet memory block 352. The MAC interface block 310 may pre-pend TCP and IP headers to form an IP datagram. The MAC interface block 310 may be adapted to add the data link layer 128 information, for example, a MAC header and the CRC digest before transmitting the resulting Ethernet frame.

The header block 312 may comprise suitable circuitry and/or logic that may be adapted to parse the extracted data link layer 128 information, the network layer 126 information and the transport layer 124 information of the received Ethernet frame in order to verify the CRC digest, IP checksum and TCP checksum. If the CRC digest, IP checksum or TCP checksum cannot be verified successfully, all information related to the received Ethernet frame may be discarded. If the CRC digest, IP checksum and TCP checksum are verified successfully, the received Ethernet frame may be processed further.

The IP block 314 may comprise suitable circuitry and/or logic that may be adapted to validate that an IP destination address in the received Ethernet frame may be the same as the local IP address. If the IP destination address does not match the local IP address, all information related to the received Ethernet frame may be discarded. Otherwise, the received Ethernet frame may be processed further.

The TCP transmit block 320 may comprise suitable circuitry and/or logic that may be adapted to generate IP and TCP headers. The generated headers may be communicated to the MAC interface block 310.

The TCB lookup block 322 may comprise suitable circuitry and/or logic that may be adapted to look up TCB data that may comprise TCP session information for the received Ethernet frame. The TCB data may be used to correlate the received Ethernet frame to an appropriate TCP session since there may be a plurality of TCP sessions in progress for a variety of application programs. Some application programs may be, for example, email, browser, and voice over IP telephone communications.

The scheduler block 330 may comprise suitable circuitry and/or logic that may be adapted to provide appropriate TCB information for the data to be transmitted to the network, or for data received from the network. The information may be, for example, from the context cache block 332 or the context memory block 334.

The context cache block 332 comprises suitable cache memory that may be used to cache information for TCP sessions. The context cache block 332 may be the cache used in conjunction with the context memory block 334.

The TCP receive block 340 may comprise suitable circuitry and/or logic that may be adapted to receive process the received TCP packet. The receive processing of the received TCP packet may comprise making header prediction for the next TCP packet, protecting against wrapped sequence number for the received TCP packet, and trimming overlapped data when multiple TCP packets may have redundant data. The receive processing of the received TCP packet may also comprise recording a time stamp for the received TCP packet, acknowledging receipt of TCP packets, and finishing up a TCP session. The TCP receive block 340 may also be adapted to store DMA information into the queue block 354 for transfer of the received data to the application layer 120.

The DMA engine block 350 may comprise suitable circuitry and/or logic that may be adapted to transfer data from a source to destination without a CPU intervention. For example, the DMA engine block 350 may transfer data from the packet memory block 352 to the memory block 106, and vice versa.

The packet memory block 352 may comprise suitable memory that may be utilized to store data that may be received from the network or data that may be waiting to be transmitted to the network.

The queue block 354 may comprise suitable circuitry and/or logic that may be adapted to store information for DMA transfers for the various TCP packets and to set up the DMA engine block 350 for the appropriate data transfer. The queue block 354 may also be adapted to request scheduling for outbound packets from the scheduler block 330.

The protocol processor block 356 may comprise suitable circuitry, logic, and/or code that may be adapted to communicate with the application layer 120 in order to receive information about data that may need to be transferred to the packet memory block 352 from the memory block 106, or vice versa. The protocol processor block 356 may also be adapted to determine whether to split the data from the memory block 106 to multiple TCP packets before transmitting the data. Additionally, the protocol processor block 356 may re-assemble the data that may have been received from multiple TCP packets and transferred via DMA to the memory block 106. This reassembled data information may be communicated to the application layer 120.

Accordingly, when an application running on a host sends data over the network to another host, the application layer 120 may be used to communicate appropriate information to the protocol processor block 356. The destination information communicated by the application layer 120 may allow the protocol processor block 356 to initiate a TCP session with the destination host. The protocol processor block 356 may also receive information about the number of bytes in the data to be transmitted and the location of the data. In the pipelined hardware stage 305, the protocol processor block 356 may store appropriate information in the queue block 354. The queue block 354 may set up the DMA engine block 350 to transfer data from the memory block 106 to the packet memory block 352. The DMA engine block 350 may transfer the appropriate data to the packet memory block 352. The queue block 354 may also request scheduling from the scheduler block 330 in order to transmit the data to the network. The protocol processor block 356 may also store appropriate TCB data, or TCP session information, for respective data in the context memory block 334.

In the pipelined hardware stage 303, the scheduler block 330 may receive the TCB data for the respective data stored in the packet memory block 352. The TCB data may be from the context cache block 332 or the context memory block 334. The TCB data, which may comprise the information used for the TCP and IP headers, may be communicated to the TCP transmit block 320. In the pipelined hardware stage 302, the TCP transmit block 320 may generate TCP and IP headers for the corresponding data in the packet memory block 352, and the headers may be communicated to the MAC interface block 310. In the pipelined hardware stage 301, The MAC interface block 310 may pre-pend the headers to the data from the packet memory block 352 to form a datagram. The MAC interface block 310 may then add the MAC header and the CRC digest to the IP datagram in order to form an Ethernet frame that may be transmitted on to the Ethernet network. If the destination MAC address is unknown to the MAC interface block 310, the MAC interface block 310 may send queries on the Internet. Other systems on the network may respond with the destination MAC address that may correlate to the destination IP address in the queries. When the Ethernet frame is formed, it may be transmitted on to the Ethernet network.

When receiving data from the network, the MAC interface block 310 in the pipelined hardware stage 301 may receive Ethernet frames. The MAC interface block 310 may verify that the MAC destination address may be a local MAC address associated with the MAC interface block 310. If the MAC destination address does not match the local MAC address, the Ethernet frame may be discarded. The received Ethernet frame may be communicated to the header block 312 and may be copied to the packet memory block 352.

The header block 312 may calculate CRC digest, IP checksum and TCP checksum. If the CRC digest, IP checksum or TCP checksum cannot be verified successfully, information related to the received Ethernet frame may be discarded. If the CRC digest, IP checksum and TCP checksum are verified successfully, the received Ethernet frame may be processed by the IP block 314. The IP block 314 may verify that the IP destination address may match the local IP address. If the IP destination address does not match the local IP address, all information related to the received Ethernet frame may be discarded.

In the pipelined hardware stage 302, the TCB lookup block 322 may look up a TCB index for the received Ethernet frames. The TCB index may be used to look up TCB data for the received Ethernet frame. The TCB data may be used to correlate the received Ethernet frame to an appropriate TCP session since there may be a plurality of TCP sessions in progress for a variety of application programs. Exemplary application programs may comprise an email application, a web browser, and a voice over IP telephone application. The TCB index may be passed on to the scheduler block 330 in the pipelined hardware stage 303, and the scheduler block 330 may retrieve the TCB data from the context cache block 332 or the context memory block 334. The TCB data may be used, for example, to assemble the TCP packets, including those that may be out-of-order

In the pipelined hardware stage 304, the receive process functionality of the TCP receive block 340 may comprise making header prediction for the next TCP packet, protecting against wrapped sequence number for the received TCP packet, trimming overlapped data when multiple TCP packets may have redundant data, recording a time stamp for the received TCP packet, acknowledging receipt of TCP packets, and finishing up a TCP session. The TCP receive block 340 may also store information for DMA transfers into the queue block 354 for the data from the various TCP packets. The queue block 354 in the pipelined hardware stage 304 may set up the DMA engine block 350 for appropriate data transfer to the application layer 120.

The pipelined hardware stage 305 may be a post-TCP processing stage. In the pipelined hardware stage 305, the DMA engine block 350 may DMA transfer the data stored in the packet memory block 352 to the memory block 106. The protocol processor block 356 may communicate to the application layer 120 information about data that may have been transferred from the packet memory block 352 to, for example, the memory block 106. The information sent by the protocol processor block 356 may comprise addresses for the transferred data from the different TCP packets and byte count of the various data. ,

Alternatively, the protocol processor block 356 may process the TCP packet data further when the TCP header indicates, for example, that the data may be for an RDMA target.

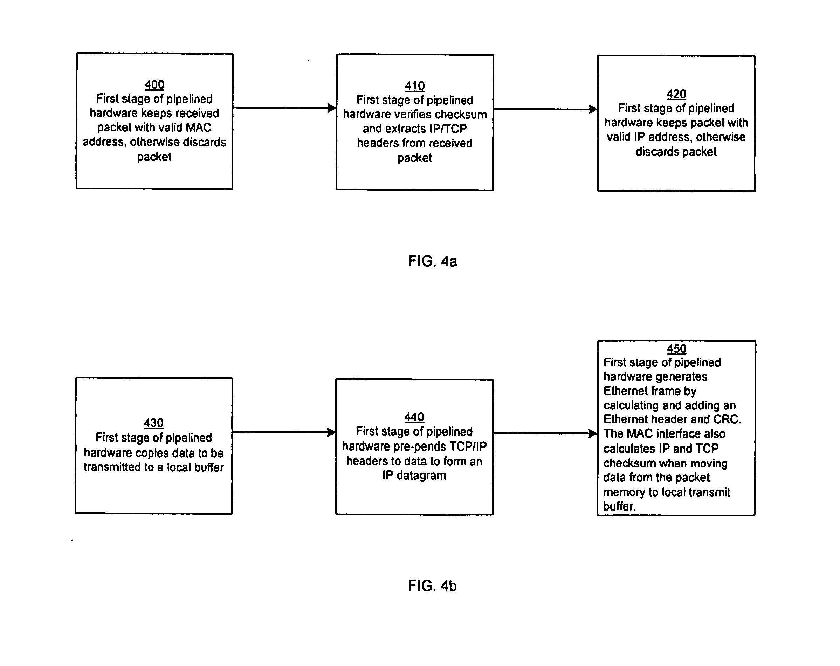

FIG. 4a is an exemplary flow diagram illustrating receiving of network data by a first stage of a plurality of parallel, pipelined hardware stages, in accordance with an embodiment of the invention. In step 400, a received packet with a valid MAC address may be kept while a packet with an invalid MAC address may be discarded. In step 410, an Ethernet frame CRC digest, IP checksum and TCP checksum may be verified and IP/TCP headers may be extracted. In step 420, the packet with a valid IP address may be kept while a packet with an invalid IP address may be discarded.

Referring to FIG. 4a, and with respect to FIG. 3b, in step 400, the MAC interface block 310 in the pipelined hardware stage 301 may receive Ethernet frames. The MAC interface block 310 may verify that the MAC destination address may be a local MAC address associated with the MAC interface block 310. If the MAC destination address does not match the local MAC address, the Ethernet frame may be discarded. Otherwise, the MAC interface block 310 may extract information for the data link layer, the network layer, and the transport layer from the Ethernet frame. The remaining data may be useful to the application running in the application layer 120. This data may be stored in the packet memory block 352.

In step 410, the header block 312 in the pipelined hardware stage 301 may verify the CRC digest, IP checksum and TCP checksum. If the CRC digest, IP checksum or TCP checksum cannot be verified successfully, all information related to the received Ethernet frame may be discarded. If the CRC digest, IP checksum and TCP checksum are verified successfully, the received Ethernet frame may be processed by the IP block 314. In step 420, the IP block 314 in the pipelined hardware stage 301 may verify that the IP destination address may match the local IP address. If the IP destination address does not match the local IP address, all information related to the received Ethernet frame may be discarded. If the IP address verification succeeds, the TCP and IP headers may be communicated to the second pipelined hardware stage 302.

FIG. 4b is an exemplary flow diagram illustrating transmitting of network data by a first stage of a plurality of parallel, pipelined hardware stages, in accordance with an embodiment of the invention. In step 430, data to be transmitted to a network may be copied on a local buffer. In step 440, TCP and IP headers may be pre-pended on to the data to form an IP datagram. In step 420, an Ethernet frame may be generated by pre-pending a MAC header and appending a CRC checksum to the IP datagram.

Referring to FIG. 4b, and with respect to FIG. 3b, in step 430, the data to be transmitted may be copied from the packet memory block 352 to a local buffer in the MAC interface block 310 in the pipelined hardware stage 301. During the copy process, the MAC interface block 310 may calculate the checksums for IP and TCP. In step 440, the MAC interface block 310 may pre-pend the TCP and IP headers to the data to be transmitted to form an IP datagram. In step 450, the MAC interface block 310 may pre-pend the MAC header and append the CRC digest to the IP datagram to form an Ethernet frame that may be transmitted to the Ethernet network. If the destination MAC address is unknown to the MAC interface block 310, the MAC interface block 310 may send queries on the Internet. Routers on the Internet may respond with the destination MAC address that may correlate to the destination IP address in the queries. When the Ethernet frame is formed, the frame may be transmitted on to the Ethernet network.

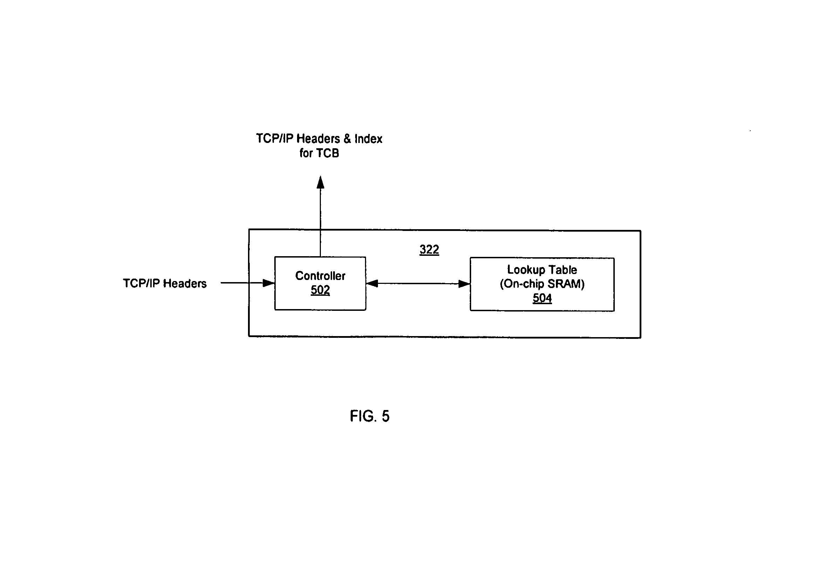

FIG. 5 is a block diagram of a second stage of a plurality of parallel, pipelined hardware stages, in accordance with an embodiment of the invention. Referring to FIG. 5, there is shown the TCB lookup block 322 that may comprise a TCB controller 502 and a lookup table 504.

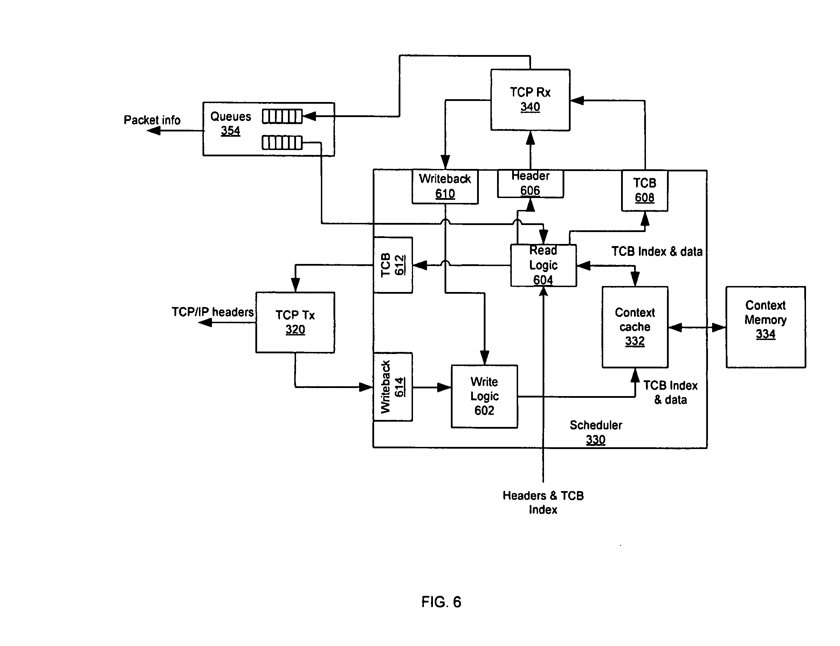

The TCB controller 502 may comprise suitable logic, circuitry and/or code that may be adapted to receive TCP and IP headers from the header block 312 in the pipelined hardware stage 301. The TCB controller 502 may parse the headers to get source and destination IP addresses and source and destination TCP port numbers. These four items may be referred to as a tuple and may be used to look up a corresponding TCB index in the lookup table 504. The TCB controller 502 may communicate the TCB index and the TCP and IP headers to a scheduler block 330 as illustrated FIG. 6.

FIG. 6 is a block diagram of a third stage of a plurality of parallel, pipelined hardware stages, in accordance with an embodiment of the invention. Referring to FIG. 6, there is shown the scheduler block 330, the queue block 354, the TCP transmit block 320, the TCP receive block 340, and the context memory block 334. The scheduler block 330 may comprise the context cache block 332, a write logic block 602, a read logic block 604, a header register block 606, TCB register blocks 608 and 612, and writeback register blocks 610 and 614.

When transmitting data to a network, various information about the data to be transmitted may be communicated from the queue block 354 to the read logic block 604. The information may comprise a starting sequence number of the data, a number of bytes in the data to be transmitted, an address of a buffer where the data to be transmitted may be stored, and a TCB index. This information may have been placed in the queue block 354 by the protocol processor block 356. The read logic block 604 may use the TCB index to retrieve TCB data from the context cache block 332 or the context memory block 334. The read logic block 604 may then place the TCB data in the TCB register block 612, and the TCB data may be communicated to the TCP transmit block 320. The TCP transmit block may modify some information as needed, for example, sequence numbers, and communicate the modified TCB data to the writeback register block 614. The modified TCB data may be communicated to the write logic block 602. The write logic block 602 may write the TCB data to the context cache 332 or the context memory block 334.

When receiving data from a network, the TCB index and the TCP and IP headers from the TCB lookup block 322 may be communicated to the read logic block 604. The TCB index may be used by the read logic block 604 to read corresponding TCB data from the context cache block 332 or the context memory block 334. The read logic block 604 may then place the TCB data in the TCB register block 608 and the TCP and IP headers in the header register block 606. The information in the TCB register block 608 and the header register block 606 may be communicated to the TCP receive block 340. The TCP receive block 340 may communicate information to the queue block 354 that may be needed to transfer received data to the, for example, the CPU 102. This information may be, for example, the starting sequence number, the number of bytes of data, the address where the data may be stored, and the TCB index. The TCP receive block 340 may modify some information as needed, for example, acknowledgment numbers, and communicate the modified TCB data to the writeback register block 610. The modified TCB data may then be communicated to the write logic block 602. The write logic block 602 may write the TCB data to the context cache 332 or the context memory block 334.

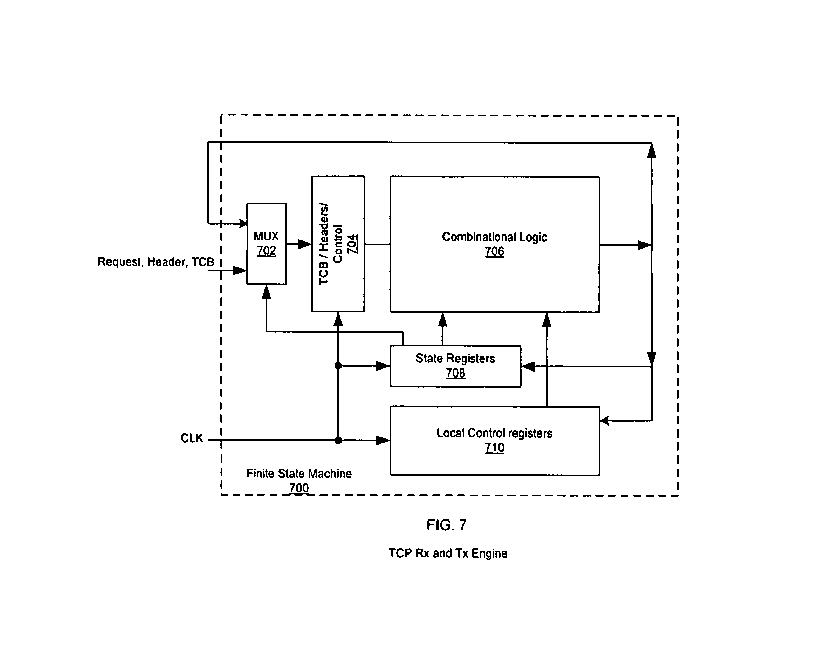

FIG. 7 is a block diagram illustrating a second stage and a fourth stage of a plurality of parallel, pipelined hardware stages, in accordance with an embodiment of the invention. The block diagram that may represent, for example, the TCP transmit block 320 and/or the TCP receive block 340. Referring to FIG. 7, there is shown a finite state machine 700 that may comprise a multiplexer 702, a TCB register block 704, a combinational logic block 706, a state register block 708, and a local control register block 710. The finite state machine 700 may transition from one state to the next, for example, on a rising edge of an input clock signal CLK.

The TCB register block 704 may comprise suitable logic and/or circuitry that may be adapted to store TCB and/or TCP and IP header data at the rising edge of the input clock signal CLK. The state register block 708 may comprise suitable logic and/or circuitry that may be adapted to output bits that may indicate a specific state at the rising edge of the input clock signal CLK. The local control register block 710 may comprise suitable logic and/or circuitry that may be adapted to output control bits for a specific state at the rising edge of the input clock signal CLK.

When a transmit or receive operation first starts for the finite state machine 700, a multiplexer select signal from the state register block 708 may be used to select an input TCB data, TCP and IP headers, and a request signal from, for example, the scheduler block 330. The data from the multiplexer 702 may be stored in the TCB register block 704. The data output from the TCB register block 704, the state register block 708 output, and the local control register block 710 output may be used by the combinational logic block 706 to generate output data. After the first state when the data from the scheduler block 330 may be chosen, subsequent states may choose the multiplexer 702 data that may be fed back from the combinational logic block 706.

For packets received from the network, the output generated by the finite state machine 700 may be, for example, the header prediction that may be used to be able to do fast processing of the next received TCP packet for the respective TCP session. If the received TCP packet is not the predicted packet, additional processing may be required. For example, protection against wrapped sequence processing may be required in the event that the sequence number may have wrapped around after reaching a maximum value. Additionally, finite state machine 700 may remove duplicate or overlapped information from various packets. For example, if the transmitting host sent additional packets because it did not receive acknowledgments for transmitted packets. The duplicated data may need to be trimmed in order to avoid redundancy. The finite state machine 700 may also generate a time stamp for each packet received in order help keep track of the TCP packets. There may also be acknowledgment processing for the received packets and finishing up a TCP session at the request of the transmitting host by the finite state machine 700.

For the data to be transmitted to the network, the finite state machine 700 may, for example, generate the TCP and IP headers. The generated outputs may be communicated to, for example, the queue block 354 for packets received from the network, and to the MAC interface block 310 for data to be transmitted to the network.

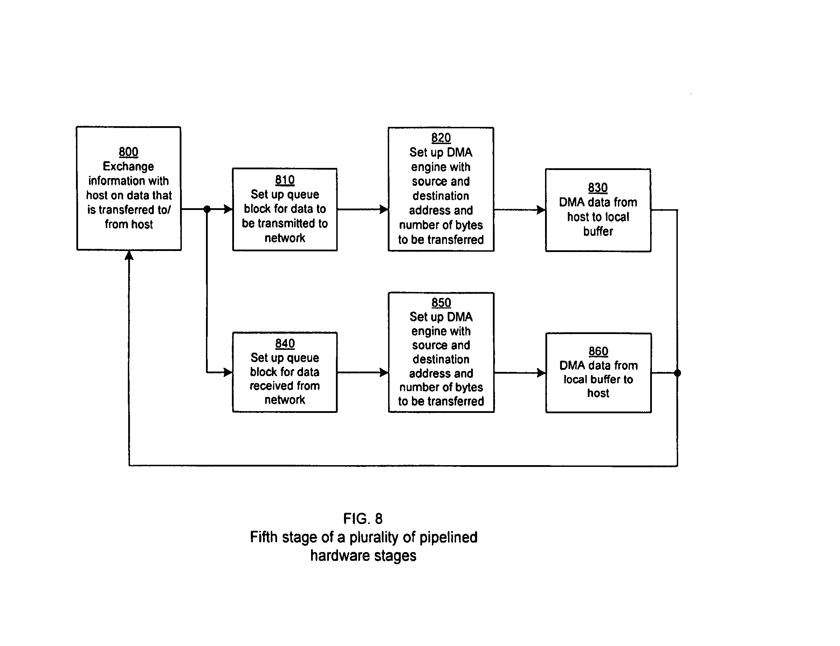

FIG. 8 is an exemplary flow diagram illustrating a fifth stage of a plurality of parallel, pipelined hardware stages, in accordance with an embodiment of the invention. In step 800, there is an exchange of messages between the CPU 102 and the protocol processor block 356 regarding data that needs to be transmitted to a network or data that has been received from the network and transferred to host memory. In step 810, the queue block 354 may be set up for transmitting data to the network. In step 820, the DMA engine block 350 may be supplied with source and destination addresses and number of bytes to transfer for a DMA transfer. In step 830, data may be DMA transferred from, for example, the host memory block 106 to the packet memory block 352. In step 840, the queue block 354 may be set up for data received from the network. In step 850, the DMA engine block may be supplied with source and destination addresses and number of bytes to transfer for a DMA transfer. In step 860, the received data may be DMA transferred from the packet memory block 352 to, for example, the host memory block 106.

Referring to FIG. 8, and with respect to FIGs. 1c and 3, the steps 800 to 860 may be performed in the fifth stage of a plurality of parallel, pipelined hardware stages of an embodiment of the invention. The fifth stage may comprise the packet memory block 352, the DMA engine block 350, the queue block 354, and the protocol processor block 356. In step 800 the protocol processor block 356 may exchange messages with, for example, the CPU 102. The messages from the CPU 102 may comprise TCP flow IDs, the size of data in bytes, and the address of the data. The TCP flow ID may be equivalent to, for example, the TCB index. The protocol processor block 356 may receive the information in the messages from the CPU 102 and populate the queue block 354 for transmitting data to the network. The next step may be step 810 when transmitting data to the network.

When receiving data, messages may be transmitted from the protocol processor block 356 to, for example, the CPU 102. The messages may indicate information for the data transferred to, for example, the main memory block 106. The information may comprise the address locations and byte count of the various data. This data information may re-assemble the data in order even though the TCP packets may not have been received in order. The next step may be step 840 when receiving data from the network. Additionally, for example, messages transmitted by the CPU 102 may be regarding information on the various addresses in the, for example, the main memory block 106 that may be available as DMA destination buffers.

In step 810, the protocol processor block 356 may communicate appropriate information to the queue block 354 for a DMA transfer. The queue block 354 may set up DMA transfer of data, for example, from the main memory block 106 to the packet memory block 352. The information may comprise, for example, a source address, a destination address, and a number of bytes to transfer. Accordingly, in step 820, the queue block 354 may set up the source DMA address, the destination DMA address, and the number of bytes to transfer in the DMA engine block 350. In step 830, after the DMA engine block 350 finishes the DMA transfer, it may indicate the end of the DMA transfer to the queue block 354. The queue block 354 may communicate this to the scheduler block 330.

In step 840, the TCP receive block 340 may communicate appropriate information to the queue block 354 for a DMA transfer. The queue block 354 may set up DMA transfer of data, for example, from the packet memory block 352 to the main memory block 106. The information may comprise, for example, a source address, a destination address, and a number of bytes to transfer. Accordingly, in step 850, the queue block 354 may set up the source DMA address, the destination DMA address, and the number of bytes to transfer in the DMA engine block 350. In step 860, after the DMA engine block 350 finishes the DMA transfer, it may indicate the end of the DMA transfer to the queue block 354. The queue block 354 may communicate this to the protocol processor block 356.

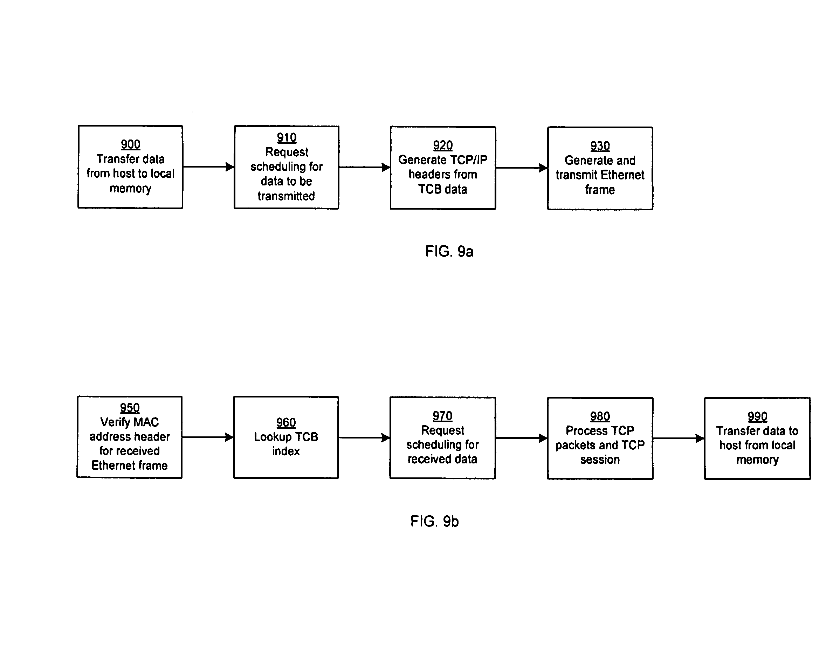

FIG. 9a is an exemplary flow diagram illustrating transmitting of data to a network via a plurality of parallel, pipelined hardware stages, in accordance with an embodiment of the invention. In step 900, there may be a transfer of data from the main memory block 106 to the packet memory block 352. In step 910, there may be a scheduling request for TCB data corresponding to data to be transmitted to the network. In step 920, TCP and IP headers may be generated from the TCB data. In step 930, the Ethernet frame may be generated, and the Ethernet frame may be transmitted on to the network.

Referring to FIG. 9a, and with respect to FIGs. 1c and 3b, data from a host may be transmitted to the network via the steps 900 to 930 executed by a plurality of parallel, pipelined hardware stages in a single network chip. In step 900, in the fifth stage of a plurality of parallel, pipelined hardware stages, the protocol processor block 356 may store appropriate information in the queue block 354 of the fifth stage of a plurality of parallel, pipelined hardware stages for a DMA transfer. The queue block 354 may then set up the DMA engine block 350 and initiate DMA transfer of data to be transmitted on to the network. The data may be DMA transferred to the packet memory block 352 from the main memory block 106.

In step 910, in the third stage of a plurality of parallel, pipelined hardware stages, the queue block 354 may communicate a TCB index to the scheduler block 330 and may request scheduling of data transmission. The scheduler block 330 may look up the TCB data that may correspond to the TCB index. The TCB data may be communicated to the TCP transmit block 320. In step 920, in the second stage of a plurality of parallel, pipelined hardware stages, the TCP transmit block 320 may generate TCP and IP headers from the TCB data. The TCP and IP headers may be communicated to the MAC interface block 310.

In step 930, in the first stage of a plurality of parallel, pipelined hardware stages, the MAC interface block 310 may pre-pend the TCP and IP headers to the appropriate data from the packet memory block 352 to generate an IP datagram. The MAC interface block 310 may then form an Ethernet frame by pre-pending an Ethernet header to the IP datagram, inserting calculated IP checksum and TCP checksum and appending a CRC digest to the IP datagram. The resulting Ethernet frame may be transmitted on to the network.

FIG. 9b is an exemplary flow diagram illustrating receiving of data from a network via a plurality of parallel, pipelined hardware stages, in accordance with an embodiment of the invention. In step 950, the CRC digest, IP checksum and TCP checksum may be verified and the TCP and IP headers may be extracted. In step 960, TCB information for the received TCP packet may be looked up. In step 970, scheduling may be requested for the received TCP packet. In step 980, the received TCP packet may be processed. In step 990, the data payload from the TCP packet may be transferred to the host.

Referring to FIG. 9b, and with respect to FIGs. 1c and 3b, data received from the network may be communicated to a host via the steps 950 to 990 executed by a plurality of parallel, pipelined hardware stages in a single network chip. In step 950, in the first stage of a plurality of parallel, pipelined hardware stages, an Ethernet frame may be received by the MAC interface 310. The MAC interface block 310 may verify that the MAC destination address may be a local MAC address associated with the MAC interface block 310. If the MAC destination address does not match the local MAC address, the Ethernet frame may be discarded. The received Ethernet frame may be communicated to the header block 312 and may be copied to the packet memory block 352.

The header block 312 may extract header information and calculate CRC digest and IP and TCP checksum. If the CRC digest, IP checksum or TCP checksum cannot be verified successfully, all information related to the received Ethernet frame may be discarded. If the CRC digest, IP checksum and TCP checksum are verified successfully, the received Ethernet frame may be processed by the IP block 314. The IP block 314 may verify that the IP destination address may match the local IP address. If the IP destination address does not match the local IP address, all information related to the received Ethernet frame may be discarded.

In step 960, in the second stage of a plurality of parallel, pipelined hardware stages, the TCB lookup block 322 may look up the TCB index for the received packet. The TCB index may be used to look up TCB data that may comprise TCP session information for the received Ethernet frame. The session information may comprise correlating the received Ethernet frame to an appropriate TCP session since there may be a plurality of TCP sessions in progress for a variety of application programs. Exemplary application programs may comprise an email application, a web browser, and a voice over IP telephone application.

In step 970, in the third stage of a plurality of parallel, pipelined hardware stages, the TCB index may be passed on to the scheduler block 330, and the scheduler block 330 may retrieve the TCB data from the context cache block 332 or the context memory block 334. The TCB data may be used, for example, to assemble the TCP packets, including those that may be out-of-order.

In step 980, in the fourth stage of a plurality of parallel, pipelined hardware stages, the TCP receive block 340 may, for example, make header prediction for the next TCP packet, protect against wrapped sequence number for the received TCP packet, trim overlapped data when multiple TCP packets may have redundant data, record a time stamp for the received TCP packet, acknowledge receipt of TCP packets, and finish up a TCP session. The TCP receive block 340 may also store information for DMA transfers into the queue block 354 for the data from the various TCP packets.

In step 990, in the fifth stage of a plurality of parallel, pipelined hardware stages, the queue block 354 may set up the DMA engine block 350 for appropriate data transfer to the application layer 120. This may be a post-TCP processing stage. The DMA engine block 350 may DMA transfer the data stored in the packet memory block 352 to the memory block 106. The protocol processor block 356 may communicate to the application layer 120 information about data that may have been transferred from the packet memory block 352 to the memory block 106. The data information sent by the protocol processor block 356 may comprise the memory block 106 addresses for the transferred data from the different TCP packets and byte count of the various data. This data information may re-assemble the data in order even though the TCP packets may not have been received in order.

Although transmit and receive paths to/from the network is described separately in FIGs. 9a and 9b, the invention should not be viewed as being limited to only transmitting or receiving. At least some of the steps 900 to 930 and 950 to 990 may occur simultaneously to be able to support some functionality of transmitting and receiving. For example, in step 900, in the fifth stage of a plurality of parallel, pipelined hardware stages, data that is to be transmitted to the network may be DMA transferred to the packet memory block 352 from the main memory block 106. Concurrently, in step 950, in the first stage of a plurality of parallel, pipelined hardware stages, an Ethernet frame may be received by the MAC interface 310.

Additionally, although an embodiment of the invention may describe processing TCP data, the invention need not be so limited. For example, the protocol processor block 356 may process the TCP packet data further when the TCP header indicates, for example, that the TCP packet data may be for an RDMA target or an iSCSI target. The protocol processor block 356 may then further parse the TCP packet data to extract the RDMA or iSCSI data.

For a 10 gigabit per second Ethernet (10G) network, a TCP packet throughput rate may be 15 million packets per second. This may be due to the TCP packet being embedded in an Ethernet frame, where a minimum size for an Ethernet frame may be 72 bytes. There may also be additional overhead due to a minimum inter-frame gap of 12 bytes between the Ethernet frames. Therefore, an exemplary maximum packet arrival rate may be one packet every 67.2 nanoseconds (ns). Accordingly, a hardware pipelined protocol stack for the transport layer 124, the network layer 126, and the data link layer 128, for example, the pipelined hardware stages 301, 302, 303, 304, and 305, may have a design goal time of 67.2 ns for each pipelined hardware stage. Although various functions may be described in series, the invention need not be so limited. For example, a checksum operation of the header block 312 and an IP address validation operation of the IP block 314 may be in parallel.

Although an embodiment of the invention may refer to the TCP transport layer and the IP network layer, the invention need not be so limited. Accordingly, an embodiment of the invention may be used for other transport layers with the IP network layer, for example, the user datagram protocol (UDP). Similarly, embodiments of the invention may also support other network layers, such as, for example, Appletalk and IPX, and the transport layers supported by those network layers. Additionally, other embodiments of the invention may differ in the number of pipelined hardware stages and/or functionality of each pipelined hardware stage.

Accordingly, the present invention may be realized in hardware, software, or a combination of hardware and software. The present invention may be realized in a centralized fashion in at least one computer system, or in a distributed fashion where different elements are spread across several interconnected computer systems. Any kind of computer system or other apparatus adapted for carrying out the methods described herein is suited. A typical combination of hardware and software may be a general-purpose computer system with a computer program that, when being loaded and executed, controls the computer system such that it carries out the methods described herein.

The present invention may also be embedded in a computer program product, which comprises all the features enabling the implementation of the methods described herein, and which when loaded in a computer system is able to carry out these methods. Computer program in the present context means any expression, in any language, code or notation, of a set of instructions intended to cause a system having an information processing capability to perform a particular function either directly or after either or both of the following: a) conversion to another language, code or notation; b) reproduction in a different material form.

While the present invention has been described with reference to certain embodiments, it will be understood by those skilled in the art that various changes may be made and equivalents may be substituted without departing from the scope of the present invention. In addition, many modifications may be made to adapt a particular situation or material to the teachings of the present invention without departing from its scope. Therefore, it is intended that the present invention not be limited to the particular embodiment disclosed, but that the present invention will include all embodiments falling within the scope of the appended claims.

## Claims

1. A method for handling network data, the method comprising:
data link layer, network layer and transport layer processing of at least one of the following: TCP packets that are received, and TCP packets that are to be transmitted, on a single network chip (110) including a packet memory block (352), said processing further comprising:
using a plurality of pipelined hardware stages (301, 302, 303, 304, 305), and
transferring packet data between said packet memory block (352) and an off-chip memory block (106) without intervention by a host CPU (102).

2. The method according to claim 1, further comprising parsing within said single network chip (110), headers of said TCP packets that are received at a first stage (301) of said plurality of pipelined hardware stages (301, 302, 303, 304, 305).

3. The method according to claim 2, further comprising validating within said single network chip (110), Ethernet frame CRCs digests, IP header checksums and TCP checksums for said TCP packets that are received at said first stage (301) of said plurality of pipelined hardware stages (301, 302, 303, 304, 305).

4. The method according to claim 2, further comprising performing within said single network chip (110), IP address validation of said TCP packets that are received at said first stage (301) of said plurality of pipelined hardware stages (301, 302, 303, 304, 305).

5. The method according to claim 1, further comprising performing within said single network chip (110), TCB index look-up of said TCP packets that are received at a second stage (302) of said plurality of pipelined hardware stages (301, 302, 303, 304, 305).

6. The method according to claim 1, further comprising scheduling within said single network chip (110), look-up of TCB data at a third stage (303) of said plurality of pipelined hardware stages (301, 302, 303, 304, 305) for at least one of the following: said TCP packets that are received, and said TCP packets that are to be transmitted.

7. A system for handling network data, the system comprising:
a single network chip (110), the single network chip (110) comprising:
a packet memory block (352), and
a plurality of on-chip pipelined hardware stages (301, 302, 303, 304, 305) configured to provide data link layer, network layer and transport layer processing of at least one of the following: TCP packets that are received, and TCP packets that are to be transmitted, said processing further including transferring packet data between said packet memory block (352) and an off-chip memory block (106) without intervention by a host CPU (102).

8. The system according to claim 7, wherein a first stage (301) of said plurality of on-chip pipelined hardware stages (301, 302, 303, 304, 305) parses within said single network chip (110), headers of said TCP packets that are received.

9. The system according to claim 8, wherein said first stage (301) of said plurality of on-chip pipelined hardware stages (301, 302, 303, 304, 305) validates within said single network chip (110), Ethernet frame CRC digests, IP checksums and TCP checksums for said TCP packets that are received.

10. The system according to claim 8, wherein said first stage (301) of said plurality of on-chip pipelined hardware stages (301, 302, 303, 304, 305) performs within said single network chip (110), IP address validation of said TCP packets that are received.

## Patentansprüche

1. Verfahren zum Handhaben von Netzwerkdaten, wobei das Verfahren umfasst:
- eine Sicherungsschicht-, Vermittlungsschicht- und Transportschichtverarbeitung von empfangenen TCP-Paketen und/oder zu sendenden TCP-Paketen auf einem einzelnen Netzwerk-Chip (110), der einen Paketspeicherblock (352) umfasst, wobei die Verarbeitung ferner umfasst:
-- Verwenden einer Mehrzahl an Pipelined-Hardware-Stufen (301, 302, 303, 304, 305), und
-- Übertragen von Paketdaten zwischen dem Paketspeicherblock (352) und einem nicht auf dem Chip befindlichen Speicherblock (106) ohne Intervention durch eine Host-CPU (102).

2. Verfahren nach Anspruch 1,
das ferner das Parsen (Analysieren) der Header der TCP-Pakete, die in einer ersten Stufe (301) der Mehrzahl an Pipelined-Hardware-Stufen (301, 302, 303, 304, 305) empfangen werden, in dem einzelnen Netzwerk-Chip (110) umfasst.

3. Verfahren nach Anspruch 2,
das ferner das Prüfen von Ethernet-Frame-CRC-Digests, IP-Header-Prüfsummen und TCP-Prüfsummen für die TCP-Pakete, die in der ersten Stufe (301) der Mehrzahl an Pipelined-Hardware-Stufen (301, 302, 303, 304, 305) empfangen werden, in dem einzelnen Netzwerk-Chip (110) umfasst.

4. Verfahren nach Anspruch 2,
das ferner das Durchführen einer IP-Adressen-Prüfung der TCP-Pakete, die in der ersten Stufe (301) der Mehrzahl an Pipelined-Hardware-Stufen (301, 302, 303, 304, 305) empfangen werden, in dem einzelnen Netzwerk-Chip (110) umfasst.

5. Verfahren nach Anspruch 1,
das ferner das Durchführen eines TCB-Index-Lookup der TCP-Pakete, die in einer zweiten Stufe (302) der Mehrzahl an Pipelined-Hardware-Stufen (301, 302, 303, 304, 305) empfangen werden, in dem einzelnen Netzwerk-Chip (110) umfasst.

6. Verfahren nach Anspruch 1,
das ferner eine Planung des zeitlichen Ablaufs (Scheduling) des Lookup von TCB-Daten in einer dritten Stufe (303) der Mehrzahl an Pipelined-Hardware-Stufen (301, 302, 303, 304, 305) der empfangenen TCP-Pakete und/oder der zu sendenden TCP-Pakete in dem einzelnen Netzwerk-Chip (110) umfasst.

7. System zum Handhaben von Netzwerkdaten, wobei das System umfasst:
- einen einzelnen Netzwerk-Chip (110), wobei der einzelne Netzwerk-Chip (110) umfasst:
-- einen Paketspeicherblock (352), und
-- eine Mehrzahl an auf dem Chip befindlichen Pipelined-Hardware-Stufen (301, 302, 303, 304, 305), die dafür konfiguriert sind, eine Sicherungsschicht-, Vermittlungsschicht- und Transportschichtverarbeitung von empfangenen TCP-Paketen und/oder zu sendenden TCP-Paketen bereitzustellen, wobei die Verarbeitung ferner das Übertragen von Paketdaten zwischen dem Paketspeicherblock (352) und einem nicht auf dem Chip befindlichen Speicherblock (106) ohne Intervention durch eine Host-CPU (102) umfasst.

8. System nach Anspruch 7,
wobei eine erste Stufe (301) der Mehrzahl an auf dem Chip befindlichen Pipelined-Hardware-Stufen (301, 302, 303, 304, 305) die Header der empfangenen TCP-Pakete in dem einzelnen Netzwerk-Chip (110) parst (analysiert).

9. System nach Anspruch 8.
wobei die erste Stufe (301) der Mehrzahl an auf dem Chip befindlichen Pipelined-Hardware-Stufen (301, 302, 303, 304, 305) Ethernet-Frame-CRC-Digests, IP-Prüfsummen und TCP-Prüfsummen für die empfangenen TCP-Pakete in dem einzelnen Netzwerk-Chip (110) prüft.

10. System nach Anspruch 8,
wobei die erste Stufe (301) der Mehrzahl an auf dem Chip befindlichen Pipelined-Hardware-Stufen (301, 302, 303, 304, 305) eine IP-Adressen-Prüfung der empfangenen TCP-Pakete in dem einzelnen Netzwerk-Chip (110) durchführt.

## Revendications

1. Procédé destiné à gérer des données de réseau, le procédé comprenant :
le traitement de couche de liaison de données, de couche de réseau et de couche de transport d'au moins l'un de ce qui suit : paquets TCP qui sont reçus et paquets TCP qui doivent être transmis, sur une puce de réseau unique (110) comprenant un bloc de mémoire de paquets (352), ledit traitement comprenant en outre les étapes consistant à :
utiliser une pluralité d'étages matériels en pipeline (301, 302, 303, 304, 305), et
transférer des données en paquets entre ledit bloc de mémoire de paquets (352) et un bloc de mémoire hors puce (106) sans intervention d'une unité de traitement centrale hôte (102).

2. Procédé selon la revendication 1, comprenant en outre l'analyse syntaxique, à l'intérieur de ladite puce de réseau unique (110), des en-têtes desdits paquets TCP qui sont reçus à un premier étage (301) de ladite pluralité d'étages matériels en pipeline (301, 302, 303, 304, 305).

3. Procédé selon la revendication 2, comprenant en outre l'étape consistant à valider, à l'intérieur de ladite puce de réseau unique (110), des synthèses CRC de trames Ethernet, des sommes de contrôle d'en-tête IP et des sommes de contrôle TCP pour lesdits paquets TCP qui sont reçus au dit premier étage (301) de ladite pluralité d'étages matériels en pipeline (301, 302, 303, 304, 305).

4. Procédé selon la revendication 2, comprenant en outre l'étape consistant à effectuer, à l'intérieur de ladite puce de réseau unique (110), la validation d'adresse IP desdits paquets TCP qui sont reçus au dit premier étage (301) de ladite pluralité d'étages matériels en pipeline (301, 302, 303, 304, 305).

5. Procédé selon la revendication 1, comprenant en outre l'étape consistant à effectuer, à l'intérieur de ladite puce de réseau unique (110), une recherche d'index TCB desdits paquets TCP qui sont reçus à un deuxième étage (302) de ladite pluralité d'étages matériels en pipeline (301, 302, 303, 304, 305).

6. Procédé selon la revendication 1, comprenant en outre l'ordonnancement, à l'intérieur de ladite puce de réseau unique (110), de la recherche de données TCB à un troisième étage (303) de ladite pluralité d'étages matériels en pipeline (301, 302, 303, 304, 305) pour au moins l'un de ce qui suit : lesdits paquets TCP qui sont reçus, et lesdits paquets TCP qui doivent être transmis.

7. Système destiné à gérer des données de réseau, le système comprenant :
une puce de réseau unique (110), la puce de réseau unique (110) comprenant :
un bloc de mémoire de paquets (352), et
une pluralité d'étages matériels en pipeline sur puce (301, 302, 303, 304, 305) configurés pour assurer le traitement de couche de liaison de données, de couche de réseau et de couche de transport d'au moins l'un de ce qui suit : paquets TCP qui sont reçus et paquets TCP qui doivent être transmis, ledit traitement comprenant en outre le transfert des données en paquets entre ledit bloc de mémoire de paquets (352) et un bloc de mémoire hors puce (106) sans intervention d'une unité de traitement centrale hôte (102).

8. Système selon la revendication 7, dans lequel un premier étage (301) de ladite pluralité d'étages matériels en pipeline sur puce (301, 302, 303, 304, 305) effectue l'analyse syntaxique à l'intérieur de ladite puce de réseau unique (110), des en-têtes desdits paquets TCP qui sont reçus.

9. Système selon la revendication 8, dans lequel ledit premier étage (301) de ladite pluralité d'étages matériels en pipeline sur puce (301, 302, 303, 304, 305) valide, à l'intérieur de ladite puce de réseau unique (110), des synthèses CRC de trames Ethernet, des sommes de contrôle IP et des sommes de contrôle TCP pour lesdits paquets TCP qui sont reçus.

10. Système selon la revendication 8, dans lequel ledit premier étage (301) de ladite pluralité d'étages matériels en pipeline sur puce (301, 302, 303, 304, 305) effectue, à l'intérieur de ladite puce de réseau unique (110), la validation d'adresse IP desdits paquets TCP qui sont reçus.
